# EUROPEAN PATENT SPECIFICATION

(11) **EP 3 719 063 B1**
(45) Date of publication and mention of the grant of the patent: **22.04.2026**
(21) Application number: 18871827.4
(22) Date of filing: 29.11.2018
(51) Int. Cl.: C08J 7/04, C09D 175/06, C08J 5/18, C08F 290/06, C08G 18/62, C08G 18/79, C08G 18/83, C09D 175/04, C09D 155/00

(54) **SHEET**
BLATT
FEUILLE

(30) Priority: 01.12.2017 KR 20170164181
(43) Date of publication of application: 07.10.2020
(73) Proprietor: LG Hausys, Ltd., Seoul 07326 (KR)
(72) Inventor: SONG, Min-Seok, Seoul 07796 (KR); KIM, Yu-Jun, Seoul 07796 (KR); PARK, Dae-Jin, Seoul 07796 (KR); LEE, Han-Na, Seoul 07796 (KR); KIM, Soo-Youl, Seoul 07796 (KR); KIM, Se-Hwan, Seoul 07796 (KR)
(74) Representative: Zacco Sweden AB
(86) International application number: PCT/KR2018/015001
(87) International publication number: WO 2019/107988

(56) References cited:
- EP-A1- 3 202 865
- EP-A1- 3 235 842
- EP-A1- 3 235 843
- EP-A2- 1 464 674
- JP-A- 2005 139 343
- JP-A- 2005 139 343
- JP-B2- 4 443 276
- KR-A- 20130 078 644
- KR-A- 20160 038 937
- KR-A- 20170 077 951
- PROF PREMAMOY GHOSH: "POLYMER SCIENCE FUNDAMENTALS OF POLYMER SCIENCE Molecular Weights of Polymers CONTENTS Introduction Concept of Average Molecular Weight Number Average Molecular Weight Membrane Osmometry Weight Average Molecular Weight Assessment of Shape of Polymer Molecules Viscosity Average Molecular Weight Gener", 21 September 2006 (2006-09-21), XP055608363, Retrieved from the Internet <URL:http://nsdl.niscair.res.in/jspui/bitstream/123456789/406/2/Molecular%20weights%20of%20polymers.pdf> [retrieved on 20190724]
- NICOLAS FEDELICH: "Application Handbook Thermal Analysis of Polymers Selected Applications Thermal Analysis", 1 January 2013 (2013-01-01), XP055608279, Retrieved from the Internet <URL:https://www.mt.com/dam/LabDiv/guides-glen/ta-polymer/TA_Polymers_Selected_Apps_EN.pdf> [retrieved on 20190724]

## Description

### [TECHNICAL FIELD]

The present disclosure relates to a sheet.

### [BACKGROUND]

To protect products from damage due to external mechanical, physical and chemical influences and in order to achieve aesthetics, various coating layers or coating films have been applied to surfaces of various molded products such as interior and exterior materials for buildings, interior and exterior materials for automobile, or various plastic products. However, scratches or cracks of the coating surfaces of the products resulting from the external impact will deteriorate the appearance, main performance and lifespan of the product. Thus, various studies are under way to protect the product surface to maintain a quality of the product for a long time.

In particular, research of and interest in coating materials with a self-healing function has been increasing rapidly in recent years. The self-healing refers to a property in which when external physical force or stimulus is applied to the coating layer such that scratches or damages occur in the coating layer, the scratches or damages are gradually healed or reduced by itself.

However, in a conventional coating layer having the self-healing, mechanical properties of the coating layer such as hardness, abrasion resistance or strength are not sufficient, and contamination resistance is remarkably low. Particularly, when the conventional coating layer having the self-healing is applied to the exterior material for automobile, the conventional coating layer with the self-healing may not satisfy high levels in terms of mechanical properties as required. The conventional coating layer having the self-healing for automobile has a poor contamination resistance. Therefore, when a strong external stimulus is applied to the conventional coating layer, the coating layer itself may be permanently damaged and the self-healing function may be lost.

EP1464674A2 shows a paint film forming method comprising applying color base paint onto rigid resin parts and then clear paint and curing the two paint films. The clear paint comprising 60-90% by weight of a hydroxyl-containing acrylic resin (A) and 10-40% by weight of a curing agent (B), based on the combined solid content of the acrylic resin (A) and the curing agent (B), the acrylic resin (A) having a hydroxyl value of 80-160 mgKOH/g and being prepared by radical-copolymerizing (a) 8-30% by weight of a primary hydroxyl-containing monomer selected from 4-hydroxybutyl (meth)acrylate monomers and ε-caprolactone-modified vinyl monomers obtained by ring-opening polymerization of ε-caprolactone with hydroxyalkyl (meth)acrylate; (b) 10-40% by weight of secondary hydroxyl-containing monomer; and (c) 30-82% by weight of still other polymerizable unsaturated monomer.

EP3235843A1 shows a self-repairing polyurethane resin material used for producing polyurethane resin having self-repairing properties, wherein the self-repairing polyurethane resin material has an isocyanate group at its molecular terminal. The self-repairing polyurethane resin material is produced by reaction of a polyisocyanate compound consisting of aliphatic polyisocyanate and/or araliphatic polyisocyanate with an active hydrogen group-containing compound, an allophanate group and an isocyanate trimer are contained, and the mole ratio of the allophanate group relative to the isocyanate trimer is 0.1 to 20.EP3235842a1 shows a self-repairing polyurethane resin material used for producing polyurethane resin having self-repairing properties. The self-repairing polyurethane resin material has an isocyanate group at its molecular terminal. The self-repairing polyurethane resin material is produced by reaction of pentamethylenediisocyanate and an active hydrogen group-containing compound, and the active hydrogen group-containing compound contains a polyol compound having a number average molecular weight of 100 to 2000 and an average functionality of 2 to 3.

JP2005139343 is related to a thermosetting coating film made form a thermosetting resin composition taht includes a polyol resin, an amino resin curing agent, an alkoxysilane compound, a condensate of an alkoxysilane compound, or a partial hydrolyzate of the condensate, and a sulfonic acid blocked with an epoxy group as a catalyst.

EP3202865A1 is related to matt coating composition that includes: a (meth)acrylic acid ester-based resin containing a hydroxyl group; and a silicone-acrylate graft resin containing a polyacrylate main chain and a silicone side chain.

### [DISCLOSURE]

### [TECHNICAL PURPOSE]

A purpose of the present disclosure is to provide a sheet with excellent self-healing and contamination-resistance.

The invention is realized by means of solutions and combinations thereof set forth in the appended Claims.

### [TECHNICAL SOLUTION]

According to the present disclosure, there is provided a sheet that can simultaneously achieve good self-healing and excellent contamination-resistance, wherein the sheet includes a coating layer containing a cured product of acrylate graft polyester-based polyol copolymer, and a base layer.

### [TECHNICAL EFFECT]

The sheet according to the present disclosure can simultaneously achieve excellent self-healing and excellent contamination-resistance. Further, superior chipping-resistance can be achieved when the sheet has a thickness greater than a certain level.

In addition to the above effect, specific effects of the present disclosure are described below together with specific details for carrying out the present disclosure.

### [BRIEF DESCRIPTION OF DRAWINGS]

FIG. 1 schematically shows a cross section of a sheet according to one embodiment of the present disclosure.
FIG. 2 schematically shows a cross section of a sheet according to another embodiment of the present disclosure.

### [DETAILED DESCRIPTIONS]

The foregoing purposes, features and advantages will be described in detail below with reference to the accompanying drawings. Accordingly, those of ordinary skill in the art to which the present disclosure belongs may readily implement a technical idea of the present disclosure. Descriptions and details of well-known steps and elements are omitted so as not to unnecessarily obscure aspects of the present disclosure. Examples of various embodiments are illustrated and described further below. For simplicity and clarity of illustration, elements in the figures are not necessarily drawn to scale. The same reference numbers in different figures denote the same or similar elements, and as such perform similar functionality.

In addition, it will also be understood that when a first element or layer is referred to as being present "on" a second element or layer, the first element may be disposed directly on the second element or may be disposed indirectly on the second element with a third element or layer being disposed between the first and second elements or layers.

It will be understood that when a first element or layer is referred to as being "bound to", "connected to", or "coupled to" a second element or layer, the first element or layer may be directly bound to, connected to or coupled to the second element or layer, or one or more intervening elements or layers may be present therebetween.

Hereinafter, sheets according to some implementations of the present disclosure will be described.

In one implementation of the present disclosure, a coating layer includes a cured product of an acrylate graft polyester-based polyol copolymer; and a base layer.

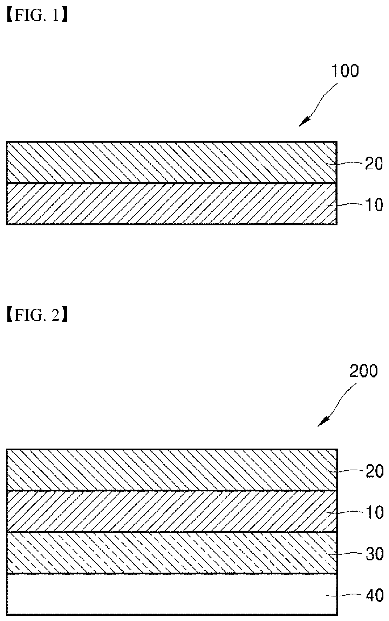

FIG. 1 is a schematic representation of a cross section of a sheet 100 according to one implementation of the present disclosure. The sheet includes a coating layer 20 formed on one face of the base layer 10. The coating layer includes a cured product of acrylate graft polyester-based polyol copolymer.

To protect products from damage due to external mechanical, physical and chemical influences and in order to achieve aesthetics, various coating layers or coating films have been applied to surfaces of various molded products such as interior and exterior materials for buildings, interior and exterior materials for automobile, or various plastic products. The sheet may refer to a sheet that contains the coating layer to protect the surfaces of such products.

The coating layer requires a self-healing function. The self-healing refers to a property in which when external physical force or stimulus is applied to the coating layer such that scratches or damages occur in the coating layer, the scratches or damages are gradually healed or reduced by itself.

The sheet includes the coating layer formed on one face of the base layer and thus achieves the self-healing, excellent mechanical properties, and excellent contamination-resistance at the same time.

The polyester-based polyol includes at least one polyester-based polyol selected from a group consisting of polyester-based polyol resulting from ring-opening polymerization of caprolactone, polyester-based polyol resulting from polycondensation reaction of diol and diacid, for example, polycondensation reaction of dicarboxylic acid and dihydroxy compound, and combinations thereof.

The acrylate graft polyester-based polyol copolymer is produced as follows. Caprolactone modified hydroxyalkyl(meth) acrylate is formed by ring opening addition polymerization of hydroxyalkyl(meth)acrylate and caprolactone. Then, a (meth)acrylate monomer is graft-polymerized onto an acrylic group of the caprolactone modified hydroxyalkyl(meth) acrylate.

The hydroxyalkyl(meth)acrylate may be, for example, a hydroxyalkyl(meth)acrylate containing a hydroxyalkyl group having 1 to 4 carbon atoms, more specifically, 2-hydroxyethyl acrylate, hydroxymethyl acrylate or the like.

When the hydroxyalkyl(meth)acrylate is reacted with caprolactone, the caprolactone is ring-opening addition polymerized therewith to form caprolactone modified hydroxyalkyl(meth)acrylate polyol.

In one example, using a following Reaction Formula 1, a polyol may be formed via reaction of hydroxyalkylacrylate with caprolactone. That is, the hydroxyalkyl(meth)acrylate is reacted with caprolactone via the following Reaction Formula 1 to form the caprolactone modified hydroxyalkyl(meth)acrylate:

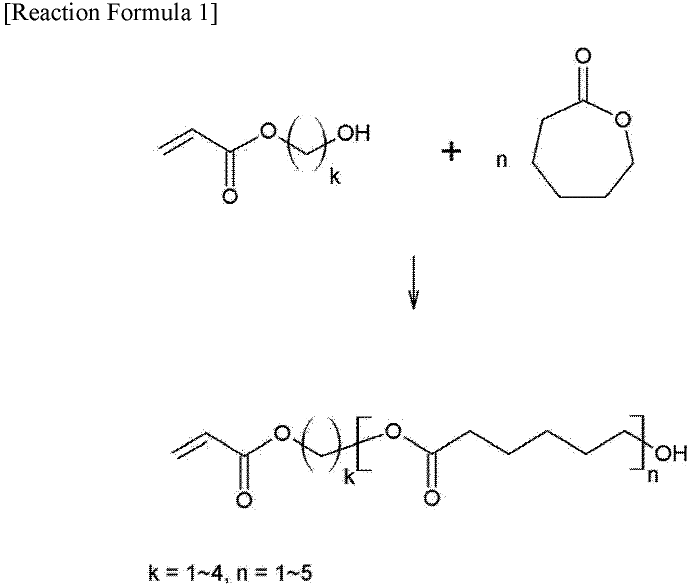

In the Reaction Formula 1, k is an integer from 1 to 4. n is an integer from 1 to 5.

In the Reaction Formula 1, a polyol structure formed by caprolactone is formed by polymerizing a caprolactone monomer via a ring-opening reaction using a catalyst. This polymerization may be sufficiently carried out even at a low temperature. Oligomers having high purity may be formed since water or impurities are not produced in the polymerization. Further, the polyol structure formed by the caprolactone may have hydrolysis resistance superior to a polyol produced by condensation polymerization of diol and diacid.

The polyol structure formed by the caprolactone is a soft segment. Since the polyol structure has a narrow molecular weight distribution, the structure may impart non-varying uniform physical properties. Therefore, the acrylate graft polyester-based polyol copolymer having the caprolactone-derived polyol structure may allow an entirety of the coating layer containing the acrylate graft polyester-based polyol copolymer to uniformly have excellent contamination-resistance, excellent self-healing, chemical resistance and abrasion resistance.

A vinyl group in the caprolactone modified hydroxyalkyl(meth)acrylate obtained by the Reaction Formula 1, that is, a vinyl group in the acrylic group may be polymerized with another vinyl group-containing monomer.

Said another vinyl group-containing monomer is a (meth)acrylate monomer.

The (meth)acrylate monomer consists of methyl(meth)acrylate, isobutyl(meth)acrylate, n-butyl(meth)acrylate, 2-hydroxyethyl(meth)acrylate.

An acrylate graft block formed by said another vinyl-containing monomer in the acrylate graft polyester-based polyol copolymer is a hard segment. However, when the above-mentioned hydroxyethyleneglycoldi(meth)acrylate is copolymerized, slight softness may be added compared to a case when remaining vinyl group-containing monomers is copolymerized.

The acrylate graft polyester-based polyol copolymer contains the methyl (meth)acrylate monomer as the (meth)acrylate monomer. In this case, the acrylate graft polyester-based polyol copolymer significantly improves contamination-resistance, chemical resistance and chipping-resistance of the sheet. Further, the (meth)acrylate monomer may include a mixed monomer between one selected from a group consisting of isobutyl(meth)acrylate, and n-butyl(meth)acrylate; and methyl (meth)acrylate monomer. In this case, crosslinking density, length of a main chain, and hardness may be controlled. Accordingly, the acrylate graft polyester-based polyol copolymer allows the sheet to have an excellent elongation while having the contamination-resistance, chemical resistance and chipping-resistance.

The monomer hydroxyethyl(meth)acrylate is contained in a content of 5 parts by weight to 20 parts by weight relative to 100 parts by weight of the acrylate graft polyester-based polyol copolymer. When the content of one monomer selected from the group consisting of hydroxyethyl(meth)acrylate, ethyleneglycoldi(meth)acrylate and combinations thereof is present in the above range of content, said one monomer may allow the crosslinking density and hardness of the acrylate graft polyester-based polyol copolymer to be controlled and allow the sheet to have the contamination-resistance and self-healing function. For example, when the content of one monomer selected from the group consisting of hydroxyethyl(meth)acrylate, ethyleneglycoldi(meth)acrylate and combinations thereof is smaller than the above defined range, the sheet may have insufficient contamination-resistance. When the content of one monomer selected from the group consisting of hydroxyethyl(meth)acrylate, ethyleneglycoldi(meth)acrylate and combinations thereof is greater than the above defined range, the sheet may have insufficient self-healing ability. That is, when the content of one monomer selected from the group consisting of hydroxyethyl(meth)acrylate, ethyleneglycoldi(meth)acrylate and combinations thereof is present in the above range of content, the sheet may have improved contamination-resistance, self-healing and chipping-resistance.

Controlling a content of the acrylate graft block in the acrylate graft polyester-based polyol copolymer may allow the crosslinking density, length of the main chain and hardness of the coating layer to be controlled.

Specifically, a weight ratio of the caprolactone modified hydroxyalkyl(meth)acrylate and the(meth)acrylate monomer is in a range of about 7: 3 to about 3: 7. When the caprolactone modified hydroxyalkyl(meth)acrylate and the(meth)acrylate monomer are graft-polymerized with each other at the above weigh ratio range, the acrylate graft polyester-based polyol copolymer may be produced.

When the coating layer contains the acrylate graft polyester-based polyol copolymer produced via graft-polymerization of the caprolactone modified hydroxyalkyl(meth)acrylate and the(meth)acrylate monomer at the above weigh ratio range, the coating layer may have excellent contamination-resistance, chemical resistance, chipping-resistance and self-healing ability. Since such properties comply with requirements of exterior materials for automobile, the coating layer is suitable as a coating layer on a paint protection film or wrapping film for automotive. For example, when the weight ratio of the caprolactone modified hydroxyalkyl(meth)acrylate and the(meth)acrylate monomer is smaller than the above range, the coating layer may have insufficient contamination-resistance, chemical resistance and chipping-resistance. When the weight ratio of the caprolactone modified hydroxyalkyl(meth)acrylate and the(meth)acrylate monomer is greater than the above range, the coating layer may have insufficient self-healing ability and elongation.

The acrylate graft polyester-based polyol copolymer may contain a hydroxyl group of the caprolactone modified hydroxyalkyl(meth)acrylate obtained in the Reaction Formula 1 and a hydroxyl group which may be contained in said another vinyl-containing monomer. A curing density of the acrylate graft polyester-based polyol copolymer may be controlled depending on a content of the contained hydroxy group. Thus, the properties of the coating layer such as elasticity, self-healing ability, elongation and hardness may be controlled.

A hydroxyl value of the acrylate graft polyester-based polyol copolymer may be in a range of about 90 mgKOH/g to about 150 mgKOH/g, specifically, about 100 mgKOH/g to about 150 mgKOH/g. When the hydroxyl value is present in the above range, the coating layer containing the acrylate graft polyester-based polyol copolymer can achieve excellent self-healing ability and excellent contamination-resistance at the same time.

A glass transition temperature of the acrylate graft polyester-based polyol copolymer may be in a range of about -20°C to about 20°C. When the acrylate graft polyol copolymer has a glass transition temperature present in the above range, the coating layer may have excellent self-healing ability and contamination-resistance. For example, when the glass transition temperature of the acrylate graft polyester-based polyol copolymer is lower than the above range, the coating layer may have insufficient chemical resistance, contamination-resistance and chipping-resistance. When the glass transition temperature of the acrylate graft polyester-based polyol copolymer is higher than the above range, the coating layer may have insufficient self-healing ability and thus may not be healed at a room temperature.

A weight average molecular weight of the acrylate graft polyester-based polyol copolymer may range from about 5,000 g/mol to about 25,000 g/mol. When the acrylate graft polyester-based polyol copolymer has a weight average molecular weight of the above range, the coating layer may have excellent self-healing ability and contamination-resistance together with excellent mechanical properties. For example, when the weight average molecular weight of the acrylate graft polyester-based polyol copolymer is smaller than the range, the mechanical properties such as strength of the coating layer may be lowered and, further, the coating layer may have insufficient self-healing ability and thus may not be healed at a room temperature. When the weight average molecular weight of the acrylate graft polyester-based polyol copolymer is greater than the range, the coating layer may have insufficient contamination-resistance and poor workability.

The coating layer does not contain polyether polyol or polycarbonate polyol. For example, when the coating layer contains polycarbonate instead of the polyester-based polyol, the coating layer may not provide sufficient self-healing ability and may have insufficient elongation. When the coating layer contains polyether polyol instead of the polyester-based polyol, the contamination-resistance of the coating layer is significantly reduced, and, further, wear resistance and weather resistance thereof are significantly reduced. Therefore, the coating layer may not be suitable for use as an automotive exterior material.

The coating layer further contains a silicone-acrylate graft resin to provide excellent water repellency, and to further improve slip property and contamination-resistance. The silicone-acrylate graft resin contains a polyacrylate main-chain and a silicon side-chain. Specifically, the silicon side chain is grafted to the polyacrylate main-chain.

Specifically, the polyacrylate main-chain may be made of a polymer or copolymer of monomers, each monomer containing at least one selected from a group consisting of n-butyl(meth)acrylate, isobutyl(meth)acrylate, methyl(meth)acrylate, hydroxyethyl(meth)acrylate and combinations thereof.

The silicon side-chain is formed by grafting a silicone compound to the polyacrylate main-chain. Specifically, the silicon compound may have a structure expressed by a following Chemical Formula 1:

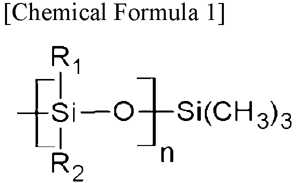

In Chemical Formula 1, each of R₁ and R₂ independently represents one selected from a group consisting of hydrogen, deuterium, a C1 to C40 alkyl group, a C1 to C40 alkenyl group, a C1 to C40 alkynyl group, a C3 to C40 cycloalkyl group, a C3 to C40 heterocycloalkyl group, a C3 to C40 cycloalkenyl group, a C3 to C40 heterocycloalkenyl group, a C3 to C40 cycloalkynyl group, a C3 to C40 heterocycloalkynyl group, a C5 to C40 aryl group, a C3 to C40 heteroaryl group, a C6 to C40 arylalkyl group, and a silane group. n may be between 20 and 130.

When the silicon side-chain of the silicon-acrylate graft resin is made of the silicon compound, the coating composition may achieve excellent contamination-resistance.

The silicon-acrylate graft resin may contain a hydroxy group to ensure a proper curing density via thermosetting. The hydroxyl group may be bonded to the polyacrylate main-chain and thus may be contained in the silicon-acrylate graft resin.

Because the silicon-acrylate graft resin contains the hydroxy group, the coating composition may ensure the proper curing density via thermal curing. Further, the silicon-acrylate graft resin may directly participate in the reaction, thereby increasing the curing density of the copolymer. The silicon-acrylate graft resin can permanently impart excellent water repellency, slip-property and contamination-resistance to the coating layer.

When the silicon-acrylate graft resin contains the hydroxy group, the silicon-acrylate graft resin may have a hydroxyl value (OH value) of about 20 to about 50. When the hydroxy group is contained in the silicon-acrylate graft resin to have the above hydroxyl value range, this may improve the properties such as compatibility and curing density of the copolymer while securing the effect of improving contamination-resistance of the coating layer.

Specifically, when the acrylate graft polyester-based polyol copolymer and polyisocyanate are subjected to urethane curing reaction, the silicon-acrylate graft resin containing the hydroxy group participates in the reaction. Thus, a structure of the coating layer is formed.

Specifically, the silicon side-chain of the silicon-acrylate graft resin is exposed from a surface of the coating layer. This may contribute to the improved contamination-resistance of the sheet containing the coating layer of the structure.

The coating layer may contain a thermally-cured product of the acrylate graft polyester-based polyol copolymer and polyisocyanate.

The polyisocyanate acts as a curing agent which may cause a crosslinking reaction via the urethane curing reaction of the curing agent with the hydroxyl group contained in the acrylate graft polyester-based polyol copolymer. Thus, this may impart excellent self-healing ability, chipping-resistance, mechanical properties including elongation and contamination-resistance to the coating layer containing the thermally-cured product.

The polyisocyanate may include at least one selected from a group consisting of HDI (hexamethylene diisocyanate)-based polyisocyanate, IPDI (isophorone diisocyanate)-based polyisocyanate, XDI (xyelne diisocyanate)-based polyisocyanate, and combinations thereof. For example, when the HDI (hexamethylene diisocyanate)-based polyisocyanate is employed, the coating layer may have excellent weather resistance to keep gloss or prevent discoloration.

The HDI (hexamethylene diisocyanate)-based polyisocyanate may be divided into bifunctional, trifunctional and hexafunctional types depending on the number of functional groups. When using the trifunctional type hexamethylene diisocyanate (HDI)-based polyisocyanate, the curing density of the coating layer may be controlled, and good self-healing ability and contamination-resistance may be secured. The trifunctional type hexamethylene diisocyanate (HDI)-based polyisocyanate may be divided into an adduct type, a biuret type, and a trimer type (isocyanurate type) depending on a structure thereof. When the coating layer contains the hexamethylene diisocyanate (HDI)-based trimer type trifunctional polyisocyanate which is the softest trifunctional type hexamethylene diisocyanate (HDI)-based polyisocyanate, the curing rate of the coating layer may be controlled, and the hardness of the layer may be adjusted to a desired level to impart excellent contamination-resistance. Further, the self-healing performance may also be adjusted to give excellent weatherability. Therefore, the coating layer may be suitable for use as an automotive exterior material.

The cure density of the coating layer may be controlled by controlling an equivalence ratio between the hydroxyl group contained in the acrylate graft polyester-based polyol copolymer and a NCO group contained in the polyisocyanate as the curing agent. Thus, the elasticity, self-healing ability, elongation, physical properties such as hardness of the coating layer may be controlled.

Specifically, the equivalence ratio between the hydroxyl group contained in the acrylate graft polyester-based polyol copolymer and a NCO group contained in the polyisocyanate as the curing agent may be in a range of about 0.8: 1 to about 1: 1.3, for example, about 1: 1 to about 1: 1.1. When the equivalence ratio is present in the above range, the coating layer may be cured to have a proper curing density. Thus, the coating layer may have excellent self-healing ability and at the same time may achieve excellent contamination-resistance.

The coating layer is made of a cured product of a coating composition containing the acrylate graft polyester-based polyol copolymer. The coating composition may further contain solvent. For example, the solvent may include one selected from a group consisting of toluene, xylene, kocosol, cyclohexanone, ethyl acetate, butyl acetate, butyl cellosolve, methyl ethyl ketone, methyl isobutyl ketone, isopropyl alcohol, and combinations thereof. The coating composition contains the solvent in consideration of a material of the base layer on which the coating layer is formed, such that the coating layer may have good coating ability on and good adhesion with the base layer. For example, the coating composition contains butyl cellosolve as the solvent to prevent the base layer from being swollen by the solvent and to allow the base layer to have good coating ability on and good adhesion with the base layer.

Specifically, when the base layer contains polyvinyl chloride, polyvinyl chloride may swell due to the solvent such as toluene and methyl ethyl ketone contained in the coating layer. This may deteriorate physical properties of the sheet such as elongation at break and curing density of the sheet. In this connection, there may be an approach to reduce a swelling time of the base layer under a severe drying condition. However, this approach may cause an appearance of the sheet to change, for example, cause to deteriorate physical properties of the sheet or discoloration of the sheet when the base layer is vulnerable to heat.

The coating composition contains the above defined solvent. Thus, when the base layer contains polyvinyl chloride, the above defined solvent may allow the sheet to have significantly improved elongation at break and good appearance quality. Further, since the sheet may be formed by directly coating and thermally curing the coating composition on the base layer, a production process may be economical.

Further, the coating composition may further contain one additive selected from a group consisting of UV stabilizers, reaction retarders, and combinations thereof.

Specifically, the coating composition may further contain one UV stabilizer selected from a group consisting of a triazole-based UV stabilizer, a triazine-based UV stabilizer, and combinations thereof to impart excellent weatherability. More specifically, the coating composition may contain the triazine-based UV light stabilizer to absorb ultraviolet light in a high efficiency after a long period of time, thereby to impart excellent weatherability to the coating layer.

Further, the coating composition may contain the reaction retardant to control a rate of a curing reaction. For example, the coating composition may contain acetylacetone as the reaction retarder.

The coating layer 20 may have a thickness of about 5 µm to about 40 µm. Specifically, the coating layer may have a thickness of about 8 µm to about 20 µm. When the coating layer has the thickness of the above range, this may improve chipping-resistance simultaneously with the self-healing ability and contamination-resistance. The thickness of the above range may be achieved by adjusting a solid content of the coating composition in a range of from about 30 wt% to about 70 wt%.

When the coating composition is the same, and when the thickness of the formed coating layer is large, the self-healing performance is improved but the crack-resistance is lowered. The crack-resistance is related to the workability. For example, when forming a curved face, a stretching process is carried out at a certain level (about 2 to 30%). When the coating layer is hard or thick, a crack may occur on a surface of the coating layer at a certain period of time after bending and at a certain temperature.

Therefore, the thickness and hardness of the coating layer must be adjusted to optimize properties such as workability (crack prevention), contamination-resistance and self-healing performance.

That is, when the coating layer is soft, the coating layer has excellent self-healing ability and crack prevention performance. When the coating layer is hard, the contamination-resistance of the coating layer is excellent. Since the various properties are in a trade-off relationship, it is necessary to appropriately adjust the hardness or softness to be realized.

When the coating layer comprising the coating composition containing the acrylate graft polyester-based polyol copolymer has the thickness range as described above, the hardness of the coating layer may be realized which may allow the coating layer to have excellent workability (crack prevention ability), contamination-resistance and self-healing performance which are in the trade-off relation as described above.

The base layer 10 serves as a support, and the base layer is not particularly limited in terms of material as long as the base layer is used in the art. For example, the material of the base layer may include at least one selected from a group consisting of polyvinyl chloride, poly carbonate, poly styrene, poly amide, poly ethylene terephthalate, thermoplastic polyurethane, and combinations thereof. For example, the base layer may contain more economical polyvinyl chloride. When the coating layer containing the coating composition is coated on the base layer containing polyvinyl chloride, the sheet may exhibit significantly improved elongation at break together with good self-healing ability, contamination-resistance and chipping-resistance. The base layer 10 may have a thickness of about 50 µm to about 300 µm.

The sheet 100 may have an elongation at break in a range of about 200% to about 350% under a condition of ASTM D638-95. When the sheet has the elongation of the above range, the sheet imparts excellent workability to a product requiring stretching construction. Therefore, this sheet may be suitable for use as a surface protective layer on interior and exterior materials, furniture, doors, chassis and the like of a building requiring a curved surface shaping, and may be suitable for a curved exterior material, for example, a car tuning film and the like for automobile.

FIG. 2 is a schematic illustration of a cross section of a sheet 200 according to one implementation of the present disclosure. Referring to FIG. 2, the sheet 200 includes a base layer 10, a coating layer 20 formed on one face of the base layer 10, an adhesive layer 30 formed on the other face of the base layer 10, and a release paper 40 formed on the adhesive layer 30.

After the release paper 40 is removed from the sheet 200, the sheet 200 may be adhered, on the adhesive layer 30, onto a surface of the interior or exterior material of the building, or a surface of the interior or exterior material of the automobile, or a surface of each of various plastic products to be protected from damage due to external mechanical, physical and chemical influences.

Another implementation of the present disclosure provide a method for production of the sheet. The method may include: a step of producing a coating composition containing an acrylate graft polyester-based polyol copolymer; applying the coating composition onto a base layer; by thermally curing the coating composition applied on the base layer to form a sheet.

Difficulty in the production method of the sheet may depend on a type of the base layer. For example, when the base layer contains polyvinyl chloride, it may not be possible to directly coat and cure the coating composition to the base layer due to the poor solvent resistance and poor heat resistance of polyvinyl chloride. In this case, the coating composition is applied and cured on a film made of polyethylene terephthalate (PET) or the like to produce a transfer film. Then, this transfer film is transferred to a polyvinyl chloride film. In this way, the sheet may be formed. However, since this approach separately requires a step of producing the transfer film, there may occur a problem of lowering the process efficiency and increasing the production cost.

The production method in accordance with the present disclosure is economical because in this method, the coating composition may be directly coated and thermally cured on the base layer to produce the sheet. Details of the materials of the components of the sheet are as described above.

In the step of applying the coating composition onto the base layer, the coating composition may contain a solid in a range of from about 20% to about 60% by weight, specifically, about 30 wt% to about 50 wt%. When satisfying the solid content in the above range, the coating composition may have excellent coating properties, and may be uniformly applied on the base layer.

A scheme for applying the coating composition may be embodied, for example, as gravure coating under a condition of maintaining the content of the solid content in the above range. Using the condition and scheme may adjust the thickness of the sheet appropriately. Specifically, the coating composition may be coated while adjusting a mesh size of a gravure roll.

The sheet production method in accordance with the present disclosure involves the step of thermally-curing the coating composition applied on the base layer to produce the coating layer. Specifically, the coating composition may be applied on the base layer and then directly thermally-cured to cure the coating composition. The coating composition may be thermally-curable while being coated on the base layer. Even when the base layer contains polyvinyl chloride, the coating layer may be produced without damaging the base layer.

Specifically, the step of producing the coating layer may be executed by directly thermally curing the coating composition applied on the base layer at a temperature of a range of about 100°C to about 150°C. When the coating layer is produced by thermally-curing the coating composition at the temperature of the above range, the coating layer may have a proper hardness without damaging the base layer of all kinds, while having good self-healing ability, elongation at break, chipping-resistance and contamination-resistance.

In another implementation of the present disclosure, a molded part of exterior material for automotive that contain the sheet may be provided. The sheet may also be applied to automotive exterior materials, for example, paint protection films and wrapping films for automobile.

The molded part of exterior material for automotive contains the sheet according to the above descriptions and thus can achieve excellent self-healing ability, elongation at break, chipping-resistance and contamination-resistance.

### (Present Example)

### Present Example 1

Caprolactone modified hydroxyethyl(meth)acrylate, methyl(meth)acrylate, 2-hydroxyethyl(meth)acrylate and butyl acrylate were copolymerized in a weight ratio of 50: 40: 5: 5. Thus, an acrylate graft polyester-based polyol copolymer having a glass transition temperature of about -3°C and a weight average molecular weight of about 10,000 g/mol was produced.

The acrylate graft polyester-based polyol copolymer and a silicon-acrylate graft resin containing a hydroxyl group, an UV stabilizer (UV absorber), acetylacetone and butyl cellosolve were mixed with each other. HDI (hexamethylene diisocyanate)-based trimer type trifunctional polyisocyanate was added to the mixture as a curing agent, thereby to prepare a coating composition.

The curing agent was added in the coating composition such that the equivalence ratio between the hydroxyl group in the coating composition and an NCO group in the polyisocyanate was 1: 1.1.

The coating composition contained a solid at a content of 40% by weight.

The coating composition was coated at a thickness of about 30 µm on a base layer made of polyvinyl chloride having a thickness of about 100 µm, via a gravure coating scheme. Then, the applied coating composition was thermally-cured in a 120 degrees C oven for 5 minutes. Thus, a sheet containing the coating layer having a thickness of about 10 µm to about 12 µm on the polyvinyl chloride base layer was formed.

### Present Example 2

Caprolactone modified hydroxyethyl(meth)acrylate, methyl(meth)acrylate, 2-hydroxyethyl(meth)acrylate and butyl acrylate were copolymerized in a weight ratio of 35: 55: 5: 5. Thus, an acrylate graft polyester-based polyol copolymer having a glass transition temperature of about 20°C and a weight average molecular weight of about 10,000 g/mol was produced. Then, a sheet was produced in the same manner as Present Example 1.

### Present Example 3

A sheet was produced in the same manner as Present Example 1 except that the coating composition of Present Example 1 was applied at a thickness of about 30 µm by the gravure coating on a base layer made of poly ethylene terephthalate.

### Present Example 4:

A sheet was produced in the same manner as Present Example 1 except that the coating composition of Present Example 1 was applied at a thickness of about 30 µm by the gravure coating on a base layer made of thermoplastic polyurethane (TPU).

### Comparative Example 1:

A sheet was produced in the same manner as Present Example 1 except that the caprolactone modified hydroxyethyl(meth)acrylate was not used but, instead, propylene glycol and propylene oxide were polymerized under an alkaline catalyst to produce polyether polyol which was used for a coating layer.

### Comparative Example 2:

A sheet was produced in the same manner as Present Example 1 except that the caprolactone modified hydroxyethyl(meth)acrylate was not used but, instead, propylene oxide and carbon dioxide were polymerized under a catalyst to prepare polycarbonate polyol which was used for a coating layer.

### <Evaluation>

### Experimental Example 1: Elongation at break

A dogbone sample of each of the sheets of the Present Examples and Comparative Examples was taken using No. 1 mold of KSM3507. Then, an elongation at break of the sample was measured at a condition of 300 mm/min and 40 mm gauge length according to ASTM D638-95 using a Z 1000 model UTM instrument from Zwick Roell. Results are listed in Table 1 below.

### Experimental Example 2: Contamination-resistance

Each of the sheets of The Present Examples and Comparative Examples was immersed in HCl 5%, base NaOH 5%, gasoline, diesel and engine oil respectively. After 24 hours, a degree of contamination on a surface of a hard coating layer of the sheet was measured by a standard specification 'DIN EN 12720: 1997-10, 1B or greater'. Then, a grade was allocated to each sheet according to evaluation criteria described below. Results are listed in Table 1 below.

The evaluation criteria are based on followings 1) to 6): 1) Grade 5 : no visible change, 2) Grade 5: Minimal change in gloss or color; 3) Grade 3: slight change in gloss or color without physical change in hard coating layer; 4) Grade 2: Considerable and visible change in gloss or color without physical change in hard coating layer, 5) Grade 1: Hard coating layer being damaged and considerable and visible change in gloss or color, 6) Unexamined: Hard coating layer being peeled away or broken.

### Experimental Example 3: Self-healing ability

After scraping each of the sheets of the Present Examples and Comparative Examples three times against a wire brush surface, we evaluates the scratches on the surface of each of the sheets visually, and then measured, using a timer, a time taken for each sheet to recover to its original state in which the scratch disappears at a room temperature. Results are listed in Table 1 below.

**[Table 1]**

| | Elongation at break (%) | Contamination-resistance | | | | | Self-healing ability (min) |
|---|---|---|---|---|---|---|---|
| | | HCl | NaOH | Gasoline | Diesel | Engine oil | |
| Present Example 1 | 300 | 5 | 5 | 5 | 5 | 5 | 0 exclusive to 1min exclusive |
| Present Example 2 | 290 | 5 | 5 | 5 | 5 | 5 | 1 to 5min |
| Present Example 3 | 150 | 5 | 5 | 5 | 5 | 5 | 0 exclusive to 1min exclusive |
| Present Example 4 | 300 | 5 | 5 | 5 | 5 | 5 | 0 exclusive to 1min exclusive |
| Comparative Example 1 | 330 | 4 | 4 | 1 | 2 | 3 | 0 exclusive to 1min exclusive |
| Comparative Example 2 | 260 | 5 | 5 | 5 | 5 | 5 | No recovery at room temperature |

As shown in Table 1, unlike the sheets of the Comparative Examples, the sheets of the Present Examples achieved excellent self-healing ability and excellent contamination-resistance at the same time. The sheets of the Present Examples achieves a thickness larger than a certain level while maintaining aesthetics. The sheets of the Present Examples may impart the optimal self-healing ability, contamination-resistance and chipping-resistance required for automotive exterior materials, which are frequently damaged due to external mechanical, physical and chemical influences.

### Reference numeral

100, 200: Sheet
10: Base layer
20: Coating layer
30: Adhesive
40: Release paper

## Claims

1. A sheet comprising:
a coating layer containing a cured product of acrylate graft polyester-based polyol copolymer; and
a base layer, wherein the coating layer is formed on one face of the base layer,
wherein the acrylate graft polyester-based polyol copolymer is produced by ring-opening addition polymerization of hydroxyalkyl(meth)acrylate and caprolactone to form caprolactone modified hydroxyalkyl(meth)acrylate, and by graft-polymerization of a (meth)acrylate monomer to an acrylic group of the caprolactone modified hydroxyalkyl(meth)acrylate, wherein the (meth)acrylate monomer consists of methyl(meth)acrylate, n-butyl(meth)acrylate or isobutyl(meth)acrylate, and hydroxyethyl(meth)acrylate, and
wherein the hydroxyethyl(meth)acrylate is contained in a content of 5 parts by weight to 20 parts by weight relative to 100 parts by weight of the acrylate graft polyester-based polyol copolymer.

2. The sheet of claim 1, wherein a weight ratio between the caprolactone modified hydroxyalkyl(meth)acrylate and the (meth)acrylate monomer is in a range of 7: 3 to 3: 7.

3. The sheet of claim 1, wherein the coating layer further contains silicon-acrylate graft resin.

4. The sheet of claim 3, wherein the silicon-acrylate graft resin contains a hydroxy group.

5. The sheet of claim 3, wherein a silicon side-chain of the silicon-acrylate graft resin is exposed from a surface of the coating layer.

6. The sheet of claim 1, wherein the coating layer contains a thermally-cured product of the acrylate graft polyester-based polyol copolymer and polyisocyanate.

7. The sheet of claim 1, wherein the base layer contains one selected from a group consisting of polyvinyl chloride, poly carbonate, poly styrene, poly amide, poly ethylene terephthalate, thermoplastic polyurethane and combinations thereof.

8. The sheet of claim 1, wherein the sheet has an elongation at break under a condition of ASTM D638-95 in a range of200% to 350%.

## Patentansprüche

1. Blatt, das umfasst:
eine Beschichtungsschicht, die ein ausgehärtetes Produkt eines acrylatgepfropften polyesterbasierten Polyolcopolymers enthält; und
eine Basisschicht, wobei die Beschichtungsschicht auf einer Seite der Basisschicht gebildet ist,
wobei das acrylatgepfropfte polyesterbasierte Polyolcopolymer durch Ringöffnungs-Additionspolymerisation von Hydroxyalkyl(meth)acrylat und Caprolacton hergestellt wird, um caprolactonmodifiziertes Hydroxyalkyl(meth)acrylat zu bilden, und durch Pfropfpolymerisation eines (Meth)acrylatmonomers an eine Acrylgruppe des caprolactonmodifizierten Hydroxyalkyl(meth)acrylats, wobei das (Meth)acrylatmonomer aus Methyl(meth)acrylat, n-Butyl(meth)acrylat oder Isobutyl(meth)acrylat sowie Hydroxyethyl(meth)acrylat besteht, und
wobei das Hydroxyethyl(meth)acrylat in einem Gehalt von 5 Gewichtsteilen bis 20 Gewichtsteilen bezogen auf 100 Gewichtsteile des acrylatgepfropften polyesterbasierten Polyolcopolymers enthalten ist.

2. Blatt nach Anspruch 1, wobei ein Gewichtsverhältnis zwischen dem caprolactonmodifizierten Hydroxyalkyl(meth)acrylat und dem (Meth)acrylatmonomer im Bereich von 7:3 bis 3:7 liegt.

3. Blatt nach Anspruch 1, wobei die Beschichtungsschicht ferner Siliciumacrylatpropfharz enthält.

4. Blatt nach Anspruch 3,
wobei das Siliciumacrylatpropfharz eine Hydroxygruppe enthält.

5. Blatt nach Anspruch 3,
wobei eine Siliciumseitenkette des Siliciumacrylatpfropfharzes von einer Oberfläche der Beschichtungsschicht exponiert ist.

6. Blatt nach Anspruch 1, wobei die Beschichtungsschicht ein thermisch ausgehärtetes Produkt des acrylatgepfropften polyesterbasierten Polyolcopolymers und eines Polyisocyanats enthält.

7. Blatt nach Anspruch 1, wobei die Basisschicht eines enthält, das aus einer Gruppe ausgewählt ist, die aus Polyvinylchlorid, Polycarbonat, Polystyrol, Polyamid, Polyethylenterephthalat, thermoplastischem Polyurethan und Kombinationen davon besteht.

8. Blatt nach Anspruch 1, wobei das Blatt eine Bruchdehnung unter einer Bedingung gemäß ASTM D638-95 in einem Bereich von 200 % bis 350 % aufweist.

## Revendications

1. Feuille comprenant :
une couche de revêtement contenant un produit durci d'un copolymère de polyol à base de polyester greffé d'acrylate ; et une couche de base, dans laquelle la couche de revêtement est formée sur une face de la couche de base,
dans laquelle le copolymère de polyol à base de polyester greffé d'acrylate est produit par polymérisation par ouverture de cycle par addition d'un (méth)acrylate d'hydroxyalkyle et de caprolactone pour former un (méth)acrylate d'hydroxyalkyle modifié par caprolactone, et par polymérisation par greffage d'un monomère de (méth)acrylate sur un groupe acrylique du (méth)acrylate d'hydroxyalkyle modifié par caprolactone, dans laquelle le monomère de (méth)acrylate est constitué de (méth)acrylate de méthyle, de (méth)acrylate de n-butyle ou de (méth)acrylate d'isobutyle, et de (méth)acrylate d'hydroxyéthyle,
dans laquelle le (méth)acrylate d'hydroxyéthyle est contenu en une teneur de 5 parties en poids à 20 parties en poids par rapport à 100 parties en poids du copolymère de polyol à base de polyester greffé d'acrylate.

2. Feuille selon la revendication 1, dans laquelle un rapport pondéral entre le (méth)acrylate d'hydroxyalkyle modifié par caprolactone et le monomère de (méth)acrylate est dans une plage de 7 : 3 à 3 : 7.

3. Feuille selon la revendication 1, dans laquelle la couche de revêtement contient en outre une résine greffée de silicium-acrylate.

4. Feuille selon la revendication 3,
dans laquelle la résine greffée de silicium-acrylate contient un groupe hydroxy.

5. Feuille selon la revendication 3,
dans laquelle une chaîne latérale de silicium de la résine greffée de silicium-acrylate est exposée à partir d'une surface de la couche de revêtement.

6. Feuille selon la revendication 1, dans laquelle la couche de revêtement contient un produit thermodurci du copolymère de polyol à base de polyester greffé d'acrylate et d'un polyisocyanate.

7. Feuille selon la revendication 1, dans laquelle la couche de base contient l'un choisi dans un groupe consistant en le polychlorure de vinyle, le polycarbonate, le polystyrène, le polyamide, le polyéthylène téréphtalate, le polyuréthane thermoplastique et les combinaisons de ceux-ci.

8. Feuille selon la revendication 1, dans laquelle la feuille présente un allongement à la rupture sous une condition de la norme ASTM D638-95 dans une plage de 200 % à 350 %.
